# EUROPÄISCHE PATENTSCHRIFT

(11) **EP 4 340 113 B1**
(45) Veröffentlichungstag und Bekanntmachung des Hinweises auf die Patenterteilung: **26.02.2025**
(21) Anmeldenummer: 23196743.1
(22) Anmeldetag: 12.09.2023
(51) Int. Cl.: H01M 50/342, H01M 50/35, H01M 50/30

(54) **BATTERIEMODUL**
BATTERY MODULE
MODULE DE BATTERIE

(30) Priorität: 13.09.2022 DE 102022209586
(43) Veröffentlichungstag der Anmeldung: 20.03.2024
(73) Patentinhaber: thyssenkrupp Marine Systems GmbH, 24143 Kiel (DE); thyssenkrupp AG, 45143 Essen (DE)
(72) Erfinder: Nagorny, Boris, 22949 Ammersbek (DE); Pein, Marc, 24147 Kiel (DE)
(74) Vertreter: thyssenkrupp Intellectual Property GmbH

(56) Entgegenhaltungen:
- WO-A2-2023/147501
- DE-A1- 102021 130 696
- US-A1- 2021 135 314

## Beschreibung

Die Erfindung betrifft ein Batteriemodul insbesondere für Akkumulatoren auf Lithium-Basis.

Akkumulatoren auf Lithium-Basis sind zunehmend interessant, beispielsweise aufgrund der hohen Energiedichte. Gerade für große Energiespeicher gibt es jedoch zwei grundlegende Unterschiede beispielsweise zum Blei-Schwefelsäure-Akkumulator. Zum einen können die einzelnen Zellen nicht einfach beliebig vergrößert werden. Dieses führt dazu, dass regelmäßig eine Vielzahl von Akkumulatoren zu einem größeren Modul zusammengestellt wird. Zum anderen ist gerade bei diesen Akkumulatoren das Problem des thermischen Durchgehens gegeben. Da hierbei auch eine große Menge an Gas entsteht, bedeutet dieses ein großes Risiko, insbesondere in kritischen Umgebungen, wie sich beispielsweise an Akkumulatoren in Luftfahrzeugen gezeigt hat.

Daher werden entsprechende Akkumulatoren, beispielsweise für den Einsatz in Unterseebooten in spezielle Module integriert, die einen hohen Schutz bieten, wenn ein thermisches Durchgehen bei einem einzelnen Akkumulator erfolgt. Dadurch wird das kaskadenartige Durchgehen benachbarter Akkumulatoren verhindert und die Sicherheit bleibt gewährleistet.

Aus der DE 10 2019 216 606 A1 ist ein Batteriemodul bekannt, wobei das zweite Modulgehäuseteil wenigstens einen ersten Gaskanal aufweist, wobei der erste Gaskanal wenigsten die Berststelle des zweiten Modulgehäuseteils, welche hinter dem ersten Akkumulator angeordnet ist, und die Berststelle des zweiten Modulgehäuseteils, welche hinter dem zweiten Akkumulator angeordnet ist auf der den Hohlräumen gegenüberliegenden Seite miteinander verbindet.

Aus der DE 10 2019 216 608 A1 ist ein Batteriemodul bekannt, wobei das Batteriemodul wenigstens einen ersten Akkumulator und einen zweiten Akkumulator aufweist, wobei alle Akkumulatoren wenigstens zwei elektrische Kontakte aufweisen, wobei alle Akkumulatoren eine Berstmembran aufweisen, wobei alle Berstmembranen in die gleiche Richtung angeordnet sind, wobei alle Akkumulatoren in einem Modulgehäuse angeordnet sind, wobei wenigstens ein erster Sensor in Wirkrichtung hinter der Berstmembran der Akkumulatoren angeordnet ist, wobei der erste Sensor zur Erfassung von Druck, Temperatur oder einer chemischen Substanz ausgebildet ist.

Mit diesen Modulen kann zwar eine Kettenreaktion bei einem thermischen Durchgehen eines einzelnen Akkumulators verhindert werden, die dabei entstehenden Gase können jedoch nicht verhindert werden. Da aufgrund der gegenüber dem Blei-Säure-Akkumulator eine wesentlich größere Anzahl an Akkumulatoren benötigt wird und immer von einer Fertigungstoleranz auszugehen ist, ist es schwierig eine absolute Sicherheit zu geben, dass es bei keinem der Akkumulatoren zu einem thermischen Durchgehen kommt. Für den Einsatz insbesondere in einem Unterseeboot ist es aber wünschenswert, gefährliche Gase zu vermeiden, um eine Gefährdung für die Besatzung zu reduzieren, auch wenn es bei einem einzelnen Akkumulator zu einem thermischen Durchgehen kommt.

Aus der DE 10 2014 212 173 A1 ist eine Gasreinigungseinheit für eine Lithium-Zelle bekannt.

Aus der US 2021 / 0 135 314 A1 ist ein Gehäuse für eine elektrochemische Zelle bekannt.

Aus der KR 10 2 251 413 B1 ist ein Energiespeichersystem bekannt.

Aus der DE 10 2012 222 870 A1 ist ein Energiespeicher mit einem Sicherheitsventil bekannt.

Aus der DE 10 2021 130 696 A1 ist ein Batterieausgasungs-Filtersystem und ein Verfahren zum Filtern von Ausgasungen aus einer Batteriezelle bekannt.

Aufgabe der Erfindung ist es, ein Batteriemodul zu schaffen, welches die Abgabe gefährlicher Gase für die Besatzung beim thermischen Durchgehen eines Akkumulators verhindert.

Gelöst wird diese Aufgabe durch das Batteriemodul mit den in Anspruch 1 angegebenen Merkmalen. Vorteilhafte Weiterbildungen ergeben sich aus den Unteransprüchen, der nachfolgenden Beschreibung sowie den Zeichnungen.

Das erfindungsgemäße Batteriemodul weist eine Mehrzahl an Akkumulatoren auf. Das Batteriemodul weist einen Gaskanal auf. Der Gaskanal weist einen Auslass auf. Am Ausgang des Gaskanals ist ein Katalysator angeordnet. Die Anordnung am Ausgang stellt sicher, dass neben dem Gas aus dem thermischen Durchgehen eines Akkumulators auch Luftsauerstoff vorhanden ist, mit dem die gefährlichen Gase, beispielsweise und insbesondere Kohlenmonoxid und Wasserstoff zu Kohlendioxid und Wasser und somit ungefährlichen Verbindungen umgesetzt werden können.

Um eine gute Umsetzung am Katalysator zu erreichen ist eine gezielte Zufuhr von Umgebungsluft in dem den Katalysator strömenden Gasstrom sinnvoll, um ausreichend Sauerstoff für eine Umsetzung zu haben. Die Herausforderung hierbei ist, dass ein Katalysator, wenn er permanent mit der Umgebungsluft in Kontakt steht. Beispielsweise und insbesondere in einem Unterseeboot kann dann der Katalysator beispielsweise von öligen Substanzen bedeckt werden und so seine Aktivität verlieren. Daher ist es notwendig, den Katalysator im Schadensfall eines Akkumulators mit Luft zu versorgen, im Regelbetrieb des Akkumulators beziehungsweise Batteriemoduls aber vor Kontamination zu schützen. Um die Sauerstoffzufuhr sicher zu stellen, weist der Gaskanal vor dem Katalysator wenigstens eine erste Luftzuführung auf. Um aber im Regelbetrieb den Katalysator zu schützen, weist die erste Luftzuführung ein Verschlusselement auf. Dadurch ist die erste Luftzuführung im Regelbetrieb verschlossen und so der Katalysator vor Kontamination geschützt. Das Verschlusselement wird durch ein Halteelement in einer die erste Luftzuführung verschließenden Position gehalten. Beim Entfernen des Halteelements kann das Verschlusselement beispielsweise wegklappen, runterfallen oder in sonst einer Weise von der ersten Luftzuführung entfernt werden, beispielsweise durch ein vorgespanntes Federelement. Das Halteelement weist ein Schmelzelement auf. Das Schmelzelement des Halteelements ist innerhalb des Katalysators angeordnet.

Der Effekt ist, dass die ersten Gase mit dem im Gaskanal vorhandenen Sauerstoff am Katalysator eine erste Umsetzung und damit verbunden eine erste Wärmefreisetzung bewirken. Diese Wärmeentwicklung wird genutzt, um das Schmelzelement zu schmelzen, sodass das Halteelement das Verschlusselement nicht mehr in Position hält. Dadurch wird die erste Luftzuführung freigegeben, wodurch Umgebungsluft dem den Katalysator zugeführten Gasstrom zugeführt wird, sodass eine sichere Umsetzung der schädlichen Gase am Katalysator erfolgt.

Das Batteriemodul kann einen beliebigen Aufbau aufweisen. Bevorzugt ist das Batteriemodul entsprechend der DE 10 2019 216 606 A1 oder der DE 10 2019 216 608 A1 die hiermit vollumfänglich für den Aufbau des Batteriemoduls mit in die Offenbarung aufgenommen werden.

Insbesondere ist das Batteriemodul für den Einsatz in einem Unterseeboot geeignet. In einem Unterseeboot gibt es nur eine sehr begrenzte umgebende Atmosphäre und diese wird zusätzlich von der Besatzung benötigt. Daher ist die Sicherheit für den Einsatz an Bord eines Unterseebootes von besonderer Bedeutung.

Beispielsweise und bevorzugt weist das Batteriemodul wenigstens einen ersten Akkumulator und einen zweiten Akkumulator auf. Bevorzugt weist das Batteriemodul 20 bis 500, besonders bevorzugt 50 bis 200, Akkumulatoren auf. Alle Akkumulatoren weisen eine zylindrische Bauform auf. Das bedeutet, die einzelnen Akkumulatoren sind nicht als Pouch-Zellen ausgeführt, die üblicherweise eine größere Volumenveränderung kompensieren können. Dafür können Akkumulatoren in zylindrischer Form leicht hergestellt und auch in großer Anzahl zu einem Modul verbunden werden. Alle Akkumulatoren weisen wenigstens zwei elektrische Kontakte auf, bevorzugt genau zwei, einen für die Anode und einen für die Kathode. Alle Akkumulatoren weisen auf einer ersten Zylinderstirnfläche wenigstens einen elektrischen Kontakt auf. Beispielsweise kann der andere elektrische Kontakt über die Mantelfläche kontaktiert werden. Weiter weisen alle Akkumulatoren auf einer zweiten Zylinderstirnfläche eine Berstmembran auf.

Im Batteriemodul sind alle Akkumulatoren beispielsweise und bevorzugt parallel zueinander angeordnet, wobei alle ersten Zylinderstirnflächen in die gleiche Richtung angeordnet sind. Hierdurch kann die elektrische Energie zentral auf einer Seite abgeführt werden. Alle Akkumulatoren sind in einem Modulgehäuse angeordnet.

Das Modulgehäuse weist beispielsweise und bevorzugt ein erstes Modulgehäuseteil und ein zweites Modulgehäuseteil auf. Das erste Modulgehäuseteil ist flächig ausgeführt und senkrecht zur Längsrichtung der Akkumulatoren angeordnet. Auch das zweite Modulgehäuseteil ist flächig ausgeführt und senkrecht zur Längsrichtung der Akkumulatoren angeordnet.

Das erste Modulgehäuseteil weist beispielsweise und bevorzugt erste Ausnehmungen zur Aufnahme jeweils eines Teils der Akkumulatoren im Bereich der ersten Zylinderstirnflächen auf. Das erste Modulgehäuseteil weist im Bereich der ersten Ausnehmungen Öffnungen zur Durchführung der elektrischen Verbindungen auf. Dieses ist notwendig, um die Akkumulatoren elektrisch kontaktieren und die Leistung abführen zu können. Das zweite Modulgehäuseteil weist zweite Ausnehmungen zur Aufnahme jeweils eines Teils der Akkumulatoren im Bereich der zweiten Zylinderstirnflächen auf.

Beispielsweise und bevorzugt ist zwischen dem ersten Modulgehäuseteil, den zweiten Modulgehäuseteil und den Akkumulatoren eine Vergussmasse angeordnet.

Das zweite Modulgehäuseteil weist beispielsweise und bevorzugt im Bereich der zweiten Ausnehmungen Berststellen auf. Zwischen den Berststellen des zweiten Modulgehäuseteils und den Berstmembranen der zweiten Zylinderstirnflächen ist jeweils ein Hohlraum angeordnet. Der Hohlraum kann beispielsweise und bevorzugt gasgefüllt, insbesondere luftgefüllt oder Schutzgas-gefüllt, insbesondere mit Stickstoff oder Argon gefüllt, sein.

Durch die Anordnung aller Akkumulatoren in dem Modulgehäuse sind alle Akkumulatoren gegenüber der Umgebung geschützt. Kommt es nun zum thermischen Durchgehen eines Akkumulators, so produziert dieser großen Mengen heißer Gase, welche bei direkten Kontakt leicht dazu führen können, dass benachbarte Akkumulatoren ebenfalls kritisch werden und selber thermischen durchgehen. Da die Akkumulatoren jedoch innerhalb des Modulgehäuses geschützt sind, kann ein einzelner durchgehender Akkumulator nicht benachbarte Akkumulatoren ebenfalls kritisch werden lassen. Ein einfaches und vollständiges Einbauen würde jedoch dazu führen, dass der entstehende Druck nicht abgeführt werden kann. Kommt es bei einem einzelnen Akkumulator nun zu einem thermischen Durchgehen, so entsteht im Inneren des Akkumulators ein Druck dieser lässt die Berstmembran an der zweiten Zylinderstirnfläche bersten. Hierdurch steigt der Druck im Hohlraum, welcher zu dem Akkumulator benachbart ist. Dieser Druckanstieg führt dazu, dass auch die Berststelle im Bereich der zweiten Ausnehmungen des zweiten Modulgehäuse Teils birst, sodass die entstehenden Gase nach außen abgeführt werden und der Druck abgebaut wird, ohne dass weiterer Schaden erzeugt wird.

Beispielsweise und bevorzugt weist das zweite Modulgehäuseteil wenigstens einen ersten Gaskanal auf, wobei der erste Gaskanal wenigsten die Berststelle des zweiten Modulgehäuseteils, welche hinter dem ersten Akkumulator angeordnet ist, und die Berststelle des zweiten Modulgehäuseteils, welche hinter dem zweiten Akkumulator angeordnet ist auf der den Hohlräumen gegenüberliegenden Seite miteinander verbindet. Durch den ersten Gaskanal können somit Gase, welche bei einem thermischen Durchgehen oder anderer exothermen chemischen Reaktion eines Akkumulators entstehen, gezielt abgeführt werden, beispielsweise nach oben abgeführt werden. Dieses ist besonders bevorzugt, wenn mehrere Batteriemodule nebeneinander aufgestellt werden sollen, damit die entstehenden Gase nicht mit den elektrischen Kontakten eines anderen Batteriemoduls in Kontakt kommen, da sie diese beschädigen könnten.

In einer weiteren Ausführungsform der Erfindung weist der Gaskanal im Bereich des Katalysators einen verjüngten Querschnitt auf. Hierdurch wird die Strömungsgeschwindigkeit erhöht, was wiederum aufgrund des Bernoulli-Effekts zu einem niedrigeren Druck und damit einem Ansaugen von Umgebungsluft führt. Außerdem führt die aufgrund des Venturi-Effekts höhere Strömungsgeschwindigkeit zu einer turbulenteren Strömung, was eine bessere Durchmischung zur Folge hat.

In einer weiteren Ausführungsform der Erfindung ist das Verschlusselement hülsenförmig um den Gaskanal angeordnet. Besonders bevorzugt weist das Verschlusselement zwei Schlitze in Längsrichtung auf und nimmt im entspannten Zustand eine V-förmige Form ein, wie dieses beispielsweise bei einem Dübel der Fall ist, der im Auslieferungszustand durch einen Kontakt an der Spitze zusammengehalten wird. Der Kontakt bricht bei ersten Eindrehen der Schraube und die Flügel des Dübels biegen sich nach außen. Damit kann auf weitere Elemente, wie beispielsweise ein unter dem Verschlusselement angeordnetes Federelement verzichtet werden.

In einer weiteren Ausführungsform der Erfindung besteht das Schmelzelement aus einem Elastomer, beispielsweise Polyethylen, Polypropylen, Polystryrol, Polymethylmethacrylat, Polyamid oder Polyoxymethylen. Hierbei ist ein geringer Schmelzpunkt und eine geringe Schmelzenthalpie (beziehungsweise niedrige Glasübergangstemperatur) zielführend, also insbesondere Polymere mit niedriger oder mittlerer Kettenlänge und möglichst geringer Verzweigung. Beispielsweise kann ein PE mit 10.000 Dalton und einer Kristallinität von 50 % verwendet werden.

In einer weiteren Ausführungsform der Erfindung enthält der Katalysator Platin. Platin ist auf der einen Seite besonders gut geeignet, um Wasserstoff katalytisch zu entzünden. Ebenso kann Kohlenmonoxid an Platin gut umgesetzt werden. Es muss jedoch eben nicht das gesamte gefährliche Gas am Katalysator umgesetzt werden. Es kann bereits ausreichen, dass durch eine Umsetzung am Katalysator Wärme oder eine Flamme erzeugt, in der dann die gefährlichen Gase zu wenigstens weniger gefährlichen oder ungefährlichen Produkten abbrennen können.

In einer weiteren Ausführungsform der Erfindung ist der Katalysator als Gitter oder Netz ausgeführt. Die Gase können somit sehr gut aus dem Gaskanal ausströmen und durch das Gitter oder Netz strömen, sich in dieser Struktur mit Luftsauerstoff vermischen und abreagieren. Das Gitter kann dabei ein Kunststoff- oder Metallgitter sein, das mit dem Katalysator beschichtet ist oder das Gitter kann aus dem Katalysator bestehen.

In einer weiteren Ausführungsform der Erfindung ist der Gaskanal am Auslass mit einer Berstmembran versehen. Die Berstmembran ist auf der dem Gaskanal zugewandten Seite mit dem Katalysator beschichtet. Dadurch ist der Katalysator im Regelbetrieb sehr gut vor Alterung oder Verschmutzung geschützt. Das weiteren kann beispielsweise eine Berstmembran aus einer Kunststofffolie extrem dünn mit beispielsweise einer Platinschicht bedampft werden, was wiederum den Edelmetallbedarf und damit die Kosten senkt. Da nur eine Initialzündung am Katalysator erfolgen muss, reicht diese geringe Menge Katalysator in der Beschichtung aus.

In einer weiteren Ausführungsform der Erfindung grenzt der Katalysator nur einseitig an den Gaskanal an. Dadurch grenzt der Katalysator mit allen anderen Seiten an die Umgebungsluft, was eine Vermischung mit dem Luftsauerstoff verbessert und so zu einer stabilen Umsetzung der gefährlichen Gase führt. Beispielsweise kann der Katalysator eine drahtschwammartige Struktur aufweisen.

Mit einem erfindungsgemäßen Batteriemodul kann beispielsweise ein Verfahren zur Umsetzung gefährlicher Gase aus einem thermischen Durchgehen eines Akkumulators durchgeführt werden. Die Gase werden zunächst von dem Akkumulator, welcher thermisch durchgegangen ist, durch einen Gaskanal geführt. Dadurch werden die heißen Gase von den anderen Akkumulatoren des Batteriemoduls weggeführt und damit das thermische Durchgehen weitere Akkumulatoren weniger wahrscheinlich. Das Gas wird im Bereich des Ausgangs des Gaskanals in Anwesenheit eines Katalysators mit Umgebungsluft vermischt und umgesetzt.

Dadurch gelangen keine gefährlichen Gase mehr in die Umgebung, insbesondere die Hauptbestandteile Kohlenmonoxid und Wasserstoff werden zuverlässig zu Kohlendioxid und Wasser umgesetzt.

Nachfolgend ist das erfindungsgemäße Batteriemodul anhand eines in den Zeichnungen dargestellten Ausführungsbeispiels näher erläutert.
- Fig. 1: Modul
- Fig. 2: erste Ausführungsform
- Fig. 3: zweite Ausführungsform
- Fig. 4: dritte Ausführungsform
- Fig. 5: viertes Ausführungsform vor der Auslösung
- Fig. 6: viertes Ausführungsform nach der Auslösung

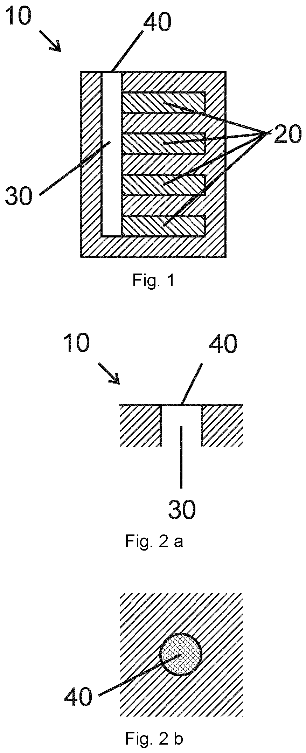

Fig. 1 zeigt einen Überblick des Batteriemoduls 10. Die Fig. 2 bis Fig. 4 zeigen dann drei beispielhafte Ausführungsformen, wie der Ausgang des Gaskanals 3,0 erfindungsgemäß mit einem Katalysator 40 versehen sein kann.

In Fig. 1 ist das Batteriemodul 10 vereinfacht in einem Querschnitt gezeigt. Im dargestellten Fall weist das Batteriemodul 4 Akkumulatoren auf, üblicherweise wird die Zahl deutlich höher liegen. Die Akkumulatoren sind so angeordnet, dass diese beim thermischen Durchgehen eine Verbindung zu Gaskanal 30 aufweisen. Dadurch werden die heißen Gase schnell und sicher abgeführt. Das Batteriemodul 10 kann insbesondere entsprechend der DE 10 2019 216 606 A1 oder der DE 10 2019 216 608 A1 ausgeführt sein. Neu hinzu kommt, dass am Auslass des Gaskanals 30 ein Katalysator 40 angeordnet ist, um die gefährlichen Gase, beispielweise und insbesondere Kohlenmonoxid und Wasserstoff umzusetzen, insbesondere mit Luftsauerstoff zu verbrennen. Aus Kohlenmonoxid wird Kohlendioxid, aus Wasserstoff Wasser.

Im Folgenden sind drei beispielhafte Ausführungsformen zur Anordnung des Katalysators 40 am Auslass des Gaskanals 30 gezeigt.

Fig. 2 besteht aus Fig. 2 a und Fig. 2 b. Fig. 2 a zeigt einen seitlichen Querschnitt, Fig. 2 b eine Aufsicht. Der Katalysator 40 ist in dieser ersten Ausführungsform als ein Platin-Netz am Auslass des Gaskanals 30 ausgebildet. Vorteil ist, dass dieser sauber mit dem Batteriemodul 10 abschließt und selber nur einen geringen Strömungswiderstand bildet, die heiß austretenden Gase somit nicht zurückgehalten werden und nicht weitere Akkumulatoren 20 überhitzen können.

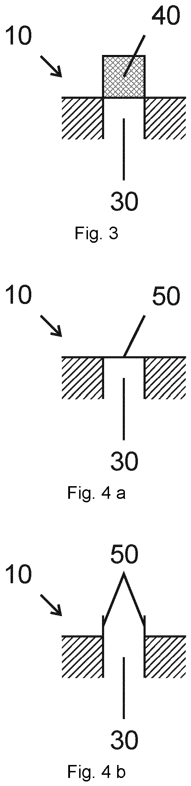

In Fig. 3 ist eine weitere beispielhafte zweite Ausführungsform gezeigt. Der Katalysator 40 ist als Drahtkäfig oder als Drahtwolle ausgebildet. Durch das ausströmende Gas wird von der Seite zusätzliche Umgebungsluft eingesogen, sodass es bereits im Bereich des Katalysators 40 zu einer besseren Vermischung zwischen Umgebungsluft und ausströmenden Gasen kommt, was die Zündzuverlässigkeit erhöht und eine Umsetzung am Katalysator 40 fördert. Nachteilig ist, dass der Katalysator 40 sich dadurch über die Oberfläche des Batteriemoduls 10 erhebt.

Fig. 4 besteht aus Fig. 4 a und Fig. 4 b. Fig. 4 zeigt eine dritte beispielhafte Ausführungsform mit einer Bestmembran 50. In Fig. 4 a ist diese im Normalzustand geschlossen dargestellt, in Fig. 4 bgeöffnet nach dem thermischen Durchgehen eines Akkumulators 20. Die Berstmembran 50 ist beispielsweise eine dünne Kunststofffolie, beispielsweise auf Polyethylen, Polypropylen oder Polytetrafluorethylen. Die Berstmembran 50 ist auf der zum Gaskanal 30 gerichteten Seite mit einer Katalysatorschicht beschichtet, beispielweise mit Platin bedampft. Solche Schichten können extrem dünn und damit materialsparend sein. Bei einem thermischen Durchgehen reißt die Berstmembran 50 auf und die gefährlichen Gase kommen mit Luftsauerstoff und dem Katalysator 40 in Kontakt. Vorteil dieser Ausführungsform ist, dass der Katalysator 40 im Normalbetrieb nicht der Umgebung ausgesetzt ist, also nicht beispielweise von Staub bedeckt werden kann. Somit ist im Ernstfall die Einsatzfähigkeit des Katalysators gewährleistet.

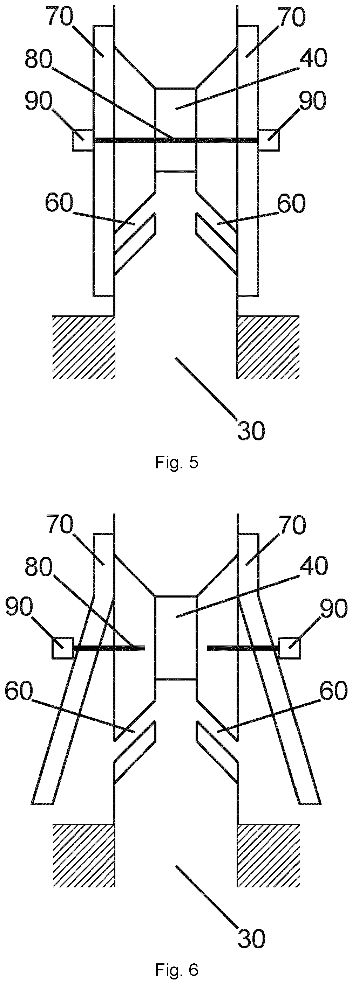

In Fig. 5 und Fig. 6 ist eine vierte Ausführungsform gezeigt. Fig. 5 zeigt diese im Regelbetrieb und Fig. 6 nach dem Auslösen nach einem Thermal Runaway. Der Gaskanal 30 weist Luftzuführungen 60 auf, die unter dem Katalysator 40 angeordnet sind. Im Normalzustand, wie in Fig. 5 gezeigt, werden die Luftzuführungen 60 durch das Verschlusselement 70 verschlossen. Dieses geschieht durch ein Halteelement, welches aus einem Schmelzelement 80 und zwei Spannelementen 90 besteht. Kommt es zu einem Thermal Runaway, so vermischen sich die Gase mit der Luft im Gaskanal 30, sodass am Anfang eine gewisse kleine Umsetzung dieses Gasgemisches am Katalysator 40 zu einer Temperaturerhöhung kommt, sodass das Schmelzelement 80 schmilzt. Dadurch springt das Verschlusselement 70 in seinen entspannten Zustand, wie dieser in Fig. 6 dargestellt ist. Dadurch werden die Luftzuführungen 60 freigegeben, sodass Luft angesaugt werden kann. Dieses wird durch die Verengung des Gaskanals 30 verbessert. Durch die Verengung kommt es durch den Venturi-Effekt zu einer Erhöhung der Strömungsgeschwindigkeit, die eine bessere Vermischung fördert und durch den Bernoulli-Effekt zu einer Druckerniedrigung, sodass die Umgebungsluft eingesogen wird.

### Bezugszeichen

- 10: Batteriemodul
- 20: Akkumulator
- 30: Gaskanal
- 40: Katalysator
- 50: Berstmembran
- 60: Luftzuführung
- 70: Verschlusselement
- 80: Schmelzelement
- 90: Spannelement

## Patentansprüche

1. Batteriemodul (10), wobei das Batteriemodul (10) eine Mehrzahl an Akkumulatoren (20) aufweist, wobei das Batteriemodul (10) einen Gaskanal (30) aufweist, wobei der Gaskanal (30) einen Auslass aufweist, **dadurch gekennzeichnet, dass** am Ausgang des Gaskanals ein Katalysator (40) angeordnet ist, wobei der Gaskanal (30) vor dem Katalysator (40) wenigstens eine erste Luftzuführung (60) aufweist, wobei die erste Luftzuführung (60) ein Verschlusselement (70) aufweist, wobei das Verschlusselement (70) durch ein Halteelement in einer die erste Luftzuführung (60) verschließenden Position gehalten wird, wobei das Halteelement ein Schmelzelement (80) aufweist, wobei das Schmelzelement (80) des Halteelements innerhalb des Katalysators (40) angeordnet ist.

2. Batteriemodul (10) nach Anspruch 1, **dadurch gekennzeichnet, dass** der Gaskanal (30) im Bereich des Katalysators (40) einen verjüngten Querschnitt aufweist.

3. Batteriemodul (10) nach einem der vorstehenden Ansprüche, **dadurch gekennzeichnet, dass** das Verschlusselement (70) hülsenförmig um den Gaskanal (30) angeordnet ist.

4. Batteriemodul (10) nach einem der vorstehenden Ansprüche, **dadurch gekennzeichnet, dass** das Schmelzelement (80) aus einem Elastomer besteht.

5. Batteriemodul (10) nach einem der vorstehenden Ansprüche, **dadurch gekennzeichnet, dass** der Katalysator (40) Platin enthält.

6. Batteriemodul (10) nach einem der vorstehenden Ansprüche, **dadurch gekennzeichnet, dass** der Katalysator (40) als Gitter oder Netz ausgeführt ist.

7. Batteriemodul (10) nach einem der vorstehenden Ansprüche, **dadurch gekennzeichnet, dass** der Gaskanal (30) am Auslass mit einer Berstmembran (50) versehen ist, wobei die Berstmembran (50) auf der dem Gaskanal (30) zugewandten Seite mit dem Katalysator (40) beschichtet ist.

8. Batteriemodul (10) nach einem der vorstehenden Ansprüche, **dadurch gekennzeichnet, dass** der Katalysator (40) nur einseitig an den Gaskanal (30) angrenzt.

## Claims

1. Battery module (10), wherein the battery module (10) has a plurality of accumulators (20), wherein the battery module (10) has a gas channel (30), wherein the gas channel (30) has an outlet, **characterised in that** a catalytic converter (40) is arranged at the outlet of the gas channel, wherein the gas channel (30) has at least one first air supply (60) upstream of the catalytic converter (40), wherein the first air supply (60) has a closure element (70), wherein the closure element (70) is held by a holding element in a position closing the first air supply (60), wherein the holding element has a melting element (80), wherein the melting element (80) of the holding element is arranged inside the catalytic converter (40).

2. Battery module (10) according to claim 1, **characterised in that** the gas channel (30) has a tapered cross-section in the region of the catalytic converter (40).

3. Battery module (10) according to one of the preceding claims, **characterised in that** the closure element (70) is arranged in the form of a sleeve around the gas channel (30).

4. Battery module (10) according to one of the preceding claims, **characterised in that** the melting element (80) consists of an elastomer.

5. Battery module (10) according to one of the preceding claims, **characterised in that** the catalyst (40) contains platinum.

6. Battery module (10) according to one of the preceding claims, **characterised in that** the catalytic converter (40) is designed as a grid or net.

7. Battery module (10) according to one of the preceding claims, **characterised in that** the gas channel (30) is provided with a bursting membrane (50) at the outlet, the bursting membrane (50) being coated with the catalyst (40) on the side facing the gas channel (30).

8. Battery module (10) according to one of the preceding claims, **characterised in that** the catalytic converter (40) is only adjacent to the gas channel (30) on one side.

## Revendications

1. Module de batterie (10), dans lequel le module de batterie (10) comporte plusieurs accumulateurs (20), dans lequel le module de batterie (10) comporte un canal de gaz (30), dans lequel le canal de gaz (30) comporte une sortie, **caractérisé en ce que** un convertisseur catalytique (40) est disposé à la sortie du canal de gaz, dans lequel le canal de gaz (30) comporte au moins une première alimentation en air (60) en amont du convertisseur catalytique (40), dans lequel la première alimentation en air (60) comporte un élément de fermeture (70), dans lequel l'élément de fermeture (70) est maintenu par un élément de maintien dans une position fermant la première alimentation en air (60), dans lequel l'élément de maintien comporte un élément de fusion (80), dans lequel l'élément de fusion (80) de l'élément de maintien est disposé à l'intérieur du convertisseur catalytique (40).

2. Module de batterie (10) selon la revendication 1, **caractérisé par le fait que** le canal de gaz (30) a une section transversale effilée dans la zone du convertisseur catalytique (40).

3. Module de batterie (10) selon l'une des revendications précédentes, **caractérisé en ce que** l'élément de fermeture (70) est disposé sous forme de manchon autour du canal de gaz (30).

4. Module de batterie (10) selon l'une des revendications précédentes, **caractérisé par le fait que** l'élément de fusion (80) est constitué d'un élastomère.

5. Module de batterie (10) selon l'une des revendications précédentes, **caractérisé par le fait que** le catalyseur (40) contient du platine.

6. Module de batterie (10) selon l'une des revendications précédentes, **caractérisé par le fait que** le convertisseur catalytique (40) est conçu comme une grille ou un filet.

7. Module de batterie (10) selon l'une des revendications précédentes, **caractérisé en ce que** le canal de gaz (30) est pourvu d'une membrane d'éclatement (50) à la sortie, la membrane d'éclatement (50) étant recouverte du catalyseur (40) sur le côté faisant face au canal de gaz (30).

8. Module de batterie (10) selon l'une des revendications précédentes, **caractérisé par le fait que** le convertisseur catalytique (40) n'est adjacent au canal de gaz (30) que d'un seul côté.
